# EUROPEAN PATENT SPECIFICATION

(11) **EP 2 354 996 B1**
(45) Date of publication and mention of the grant of the patent: **17.09.2014**
(21) Application number: 10015681.9
(22) Date of filing: 15.12.2010
(51) Int. Cl.: G06F 21/62

(54) **Apparatus and method for remote processing while securing classified data**
Vorrichtung und Verfahren zur dezentralen Verarbeitung bei gleichzeitiger Sicherung von Geheimdaten
Appareil et procédé de traitement à distance tout en sécurisant les données classifiées

(30) Priority: 31.12.2009 US 650571
(43) Date of publication of application: 10.08.2011
(73) Proprietor: SAP Portals Israel Ltd., Ra'anana 43665 (IL)
(72) Inventor: Helfman, Nadav, 69190 Walldorf (DE); Ebner, Rachel, 69190 Walldorf (DE)
(74) Representative: Müller-Boré & Partner Patentanwälte PartG mbB

(56) References cited:
- EP-A2- 1 026 603
- WO-A1-02/23366
- WO-A1-95/15628
- WO-A2-2009/009510
- US-A1- 2003 014 654

## Description

### TECHNICAL FIELD

The present disclosure relates to computer networks in general, and to an apparatus and method for safe remote processing, in particular.

### BACKGROUND

Almost any organization today typically employs a computer network for carrying out everyday functions and tasks of the organization, such as administration, human resources management, development, production, marketing, sales, customer management, and many other functions.

Traditionally, organizations used to execute all their computerized operations and store all their data on premises, i.e., on one or more computerized platforms, possibly connected in a network.

As communication with external systems, such as accessing the internet became a necessity, firewalls were introduced for protecting the organizational network by preventing unauthorized access from outside the network, and allowing restricted and controlled access to parts of the network.

Later organizations started purchasing software solutions provided by servers which are hosted externally to the organizations, for example in hosting centers residing outside the organization Local Area Network (LAN). Such solutions are sometimes termed on-demand systems, since the organization can use them according to current needs and does not have to pre-purchase or otherwise commit to usage. On demand systems may provide computing services, as well as storage area for storing organization data. In many cases, such hosting centers are multi-tenant, i.e., provide software services for multiple customers on the same server.

An organization may have to enable the externally hosted software access to the organization data or on-premise systems, in order to allow the hosted software to provide the required functionality.

Such provided functionality may relate to particular entities related to the organization, such as a user, a user group, a system, a customer, a supplier, or any other identified entity. However, it may pose a security breech to let identifying details of the entity leave the organization's network.

For example, an external service may be used for determining the salary of a salesman based on the last month sales data, which is stored within the organization network. However, it may be required not to send the salesman's details, including for example name, employee number or any other detail, outside the organization network, and in particular outside the organization firewall. In a similar manner, it may be required not to let even the name of a client be known outside the organization network, although an external server may be responsible for determining the billing amount with which the customer is presented.

This private details problem may be even more severe in case the hosted server is a multi-tenant server which provides services to multiple customer organizations. In such case, security breaches may exist not only from external intruders, but even between legitimate users of the service.

There is thus a need for a method and system which enable an external service or application provider to receive information related to an entity associated with an organization from within the organization network, without having identifying details of the entity leaving the organization network or being sent to a system or user outside the organization network.

Document EP 1 026 603 A2 relates to an apparatus and method for depersonalizing information. Data is distributed to a data user in a depersonalized form, i.e. without revealing the identity of the individuals associated with the data. The data is otherwise unchanged. A data provider separates the personal information from the other data to create two data sets. Only the personal identifying information is provided to a Trusted Third Party (TTP). The TTP associates a unique identifier with the identifying information. The TTP transmits information that correlates unique identifiers from multiple data providers to a data user.

### SUMMARY

An apparatus and method for providing secure remote processing, without having classified data such as user credentials leaving the network of an organization.

One aspect of the disclosure relates to an apparatus according to claim 1 for providing on-demand service to an organization by a hosting center, the apparatus comprising: an on-premise connectivity agent located within a network associated with the organization for communicating with a server computing platform, the server computing platform associated with the organization network, and for delivering the on-demand service from the hosting center to the organization, the on-premise connectivity agent comprising: a credential hiding component for eliminating classified data from a message sent to the hosting center, and generating a code to be sent to the hosting center, the code corresponding to the classified data; and a credential retrieval component for receiving a code from the hosting center and retrieving the classified data in accordance with the code. Within the apparatus, the classified data optionally relates to an item selected from the group consisting of: user's credentials; a user's name; a user's e-mail; a user's personal data; an account identifier; a provider; a customer; a sale; and a transaction. Within the apparatus the credential hiding component and the credential retrieval component, optionally use a transformation between the classified details and the code based on an item selected from the group consisting of: a hash function; a look up table; a mathematical computation; a logical computation; and a mathematical and logical computation. The apparatus can further comprise a user directory for storing the classified data.

Another aspect of the disclosure relates to a method according to claim 5 for providing an on-demand service to an organization by a hosting center, the method comprising: receiving a message sent from within the organization to an on-premise connectivity agent, the message comprising classified data; generating a code in accordance with the classified data; sending the code to the hosting center; receiving a second message from the hosting center, the second message comprising the code; retrieving the classified data using the code; and sending a third message to a computing platform within the organization, the third message comprising the classified data. Within the method, the classified data optionally relates to an item selected from the group consisting of: user's credentials; a user's name; a user's e-mail; a user's personal data; an account identifier; a provider; a customer; a sale; and a transaction. Within the method, generating the code and retrieving the classified data optionally use a transformation between the classified data and the code based on an item selected from the group consisting of: a hash function; a look up table; a mathematical computation; a logical computation; and a mathematical and logical computation.

A method for providing an on-demand service to an organization by a hosting center is described. The method may comprise: receiving a message sent from a computing platform of the organization to an on-premise connectivity agent, the message comprising classified data; generating a code in accordance with the classified data; creating a communication in accordance with the message, the communication comprising the code; sending the communication to a central connectivity component via a secure link; routing the communication to a hosted connectivity agent associated with the hosting center using the metadata; sending the communication to an application associated with the hosting center; sending a second communication from the hosted connectivity agent to the central connectivity component, the second communication comprising the code; routing the second communication from the central connectivity component to the on-premise connectivity agent; retrieving the classified data from the code; and sending information comprising the classified data from the communication to the computing platform, wherein only communication related to the organization is exchanged between the central connectivity component and the on-premise connectivity agent.

### DESCRIPTION OF THE DRAWINGS

The present disclosure will be understood and appreciated more fully from the following detailed description taken in conjunction with the drawings in which corresponding or like numerals or characters indicate corresponding or like components. Unless indicated otherwise, the drawings provide exemplary embodiments or aspects of the disclosure and do not limit the scope of the disclosure. In the drawings:
Fig. 1 is a block diagram of the main components in a typical environment in which an organization consumes on-demand services, in accordance with the disclosure;
Fig. 2A is a flowchart of the main steps in a method for enabling a customer organization to use on-demand remote services by a provider employing a hosting center, in accordance with the disclosure;
Fig. 2B is a flowchart of the main steps in a method for using an on-demand service provided by a hosting center to a customer organization, in accordance with the disclosure;
Fig. 3 is a schematic block diagram of a typical environment in which the disclosed method and apparatus are used and the exchanged messages, in accordance with the disclosure; and
Fig. 4 is a flowchart of the main steps in a method for using a service external to an organization without having identifying or classified details leaving the organization network, in accordance with the disclosure.

### DETAILED DESCRIPTION

This application relates to and herein incorporates by reference: U.S. Patent Application titled "Apparatus and Method for Secure Remote Processing" filed December 31, 2009, invented by the same inventors as this application; and U.S. Patent Application Serial Number 12/166,326 titled "Method and Apparatus for Distributed Application Context-Aware Transaction Processing" filed July 2, 2008.

The disclosed method and apparatus enable one or more organizations to consume on-demand services hosted by multi-tenant servers (hosting servers), which may be provided by a third party, without having any classified details leaving the virtual boundaries of the organization network, e.g., the organization firewall. Classified details may include any data that should not leave the organization, such as data related to user credentials, an account, a provider, a customer, or the like. However, user credentials may have particular importance, since maliciously obtaining such details may be used for imposturing to the particular user and accessing the organization computerized resources. Consuming a service may relate also to executing an application, sending or receiving data or services from an application, or otherwise communicating with an application. The hosting servers may be located in a physically remote site from the client organizations.

The method and apparatus comprise an on-premise connectivity agent (OPCA) located on the organization's network and behind its firewall, and serving as an on-premise "listening" point, i.e., an access and communication point between the hosted service and the organization's systems and users. All communication between the organization's systems and the hosting servers providing the on-demand services are provided through the on-premise connectivity agent. The OPCA may also be referred to as Front End Agent (FEA).

Communication between the OPCA and the hosting center is secured, for example by certificate exchange.

The communication between the OPCA and the hosting center may be transferred using HTTP or any other standard protocol which is by default open through the firewall. It will be appreciated that the communication is processed based on data or metadata included therein, and on the functionality of the hosting center,

In order to avoid sending classified data such as identifying details, for example a user's name, a user's e-mail, a user's personal data, an account identifier, a provider's detail, a customer's detail; a sale's detail, a transaction's detail, or the like, from the organization network to the hosting center, the OPCA eliminates, conceals or hides all such data from the communication sent to the hosting center, and replaces them with a corresponding code.

When the hosting center requires data from the organization, or sends an instruction to a computing platform within the organization to perform an activity, the hosting center sends the code together with the request or instruction. The message is received by the OPCA which is the connection point between the organization and the hosting center. The OPCA retrieves the required details from the code and transfers the request to the relevant destination with the identifying details.

Thus, only the code leaves the organization network and is sent to the hosting center, while the identifying details do not. Therefore, even if the communication is intercepted, or storage or a node of the multi-tenant hosting center is broken into, no useful information regarding the organization can be obtained without intruding the organization boundaries, e.g., the firewall.

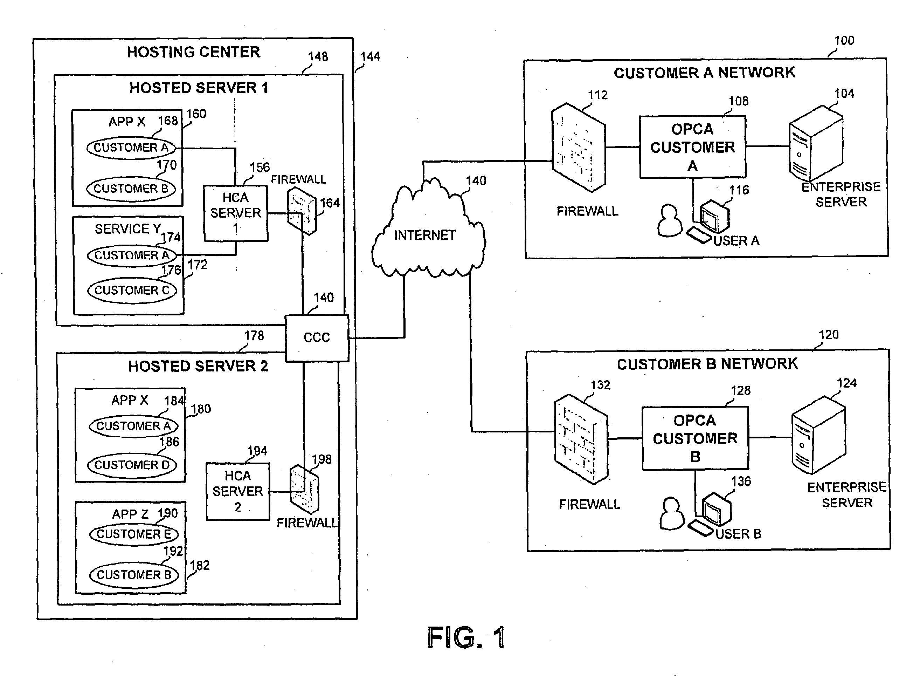

Referring now to Fig. 1, showing a block diagram of an exemplary embodiment of an environment in which an organization receives services from a source external to the organization.

The environment comprises two exemplary customer organizations networks, such as customer A network 100 and customer B network 120. The environment further comprises hosting center 144 which comprises one or more hosted servers such as hosted sever 1 (148) and hosted server 2 (178), each of which may be implemented as one or more physical servers, virtual machines, or any other implementation.

Customer A network 100 comprises an on-premises connectivity agent (OPCA) 108 for customer A, which serves as a listening point, a service connector, a communication point or an entry point for access between the organization and hosting center 144. OPCA 108 thus delivers the on-demand service to the organization.

Communication between hosting center 144 and organization network 100 or 120 may be initiated by either an entity within the organization network 100 or by an entity within hosting center 144, such that in some cases the entity within hosting center 144 is the server and the entity within organization network 100 is the client, and in other cases the roles are reversed. In operations initiated by one of the organizations, one or more users within the organization may use computing platforms such as computing platform 116 to access OPCA 108 in order to consume services supplied by hosting center 144 through OPCA 108. For example a user may access a billing application executed on a hosted server through OPCA 108 and CCC 140 in order to report his or her hours.

Customer A network 100 may further comprise enterprise server 104 for performing operations related to the enterprise, and firewall 112 for protecting the organizational computerized systems. A server at hosting center 144 may access enterprise server 104 in order to obtain information or execute operations. Such access is also enabled through OPCA 108 which is the listening point between the two systems.

For example, a billing application, named application X, provided by hosted server 1 (148) may require an employee's hourly rate available from enterprise server 104 in order to issue a bill for services provided by an employee of enterprise A. In such case, application X provided by hosted server 1 (148) accesses enterprise server 104 through OPCA 108 in order to retrieve the required information.

In a corresponding manner, Customer B enterprise 120 comprises enterprise server 124 used for performing operations related to the enterprise, firewall 132 for protecting the organizational computerized systems, and OPCA 128 serving as a communication point and an entry point for access to the organization from hosting center 144. One or more users use computing platform 136 to access OPCA 128.

Hosting center 144 comprises one or more hosted servers, hosted server 1 (148) comprises Hosting Connectivity Agent (HCA) 156 for server 1, which accesses the various supported applications or services, such as application X (160) or service Y (172).

Each such application may comprises data, executable, storage or other resources to be used by a particular customer organization, such as exemplary area 168 used by customer A when using application X, area 170 used by customer B when using application X, area 174 used by customer A when using application Y, area 176 used by customer C when using application Y, or the like.

Hosted server 1 (148) may also comprise firewall 164 for protecting the server from unauthorized accesses.

Similarly, in an exemplary and corresponding manner, virtual server 2 (178) comprises application X (180), area 184 for customer A and area 186 for customer D, application Z (182), area 190 for customer E and area 192 for customer B, HCA 194 for server 2, and firewall 198.

Hosting center 144 optionally comprises Central Connectivity Center (CCC) 140, for routing communication between OPCA 108 or OPCA 128, and HCA 156 or HCA 194. In an alternative embodiment, CCC 140 can be external to hosting center 144 and to any customer organization.

CCC 140 separates the two environments, being customer A network 100 and hosting center 144.

It will be appreciated that communication between the customer networks 100 and 120, and hosting center 144 flows through any communication channel, and in particular may flow through the internet (140).

Optional CCC 140 serves as a routing component for enabling bi-directional communication between the on-premise systems such as enterprise server 104 or enterprise server 124, and the on-demand software, provided by virtual server 1 (148) or virtual server 2 (178). CCC 140 thus enables enterprise servers to consume services from the hosting center, and if a particular service offered by the hosting center has to access an enterprise server this is also done through CCC 140. CCC 140 can also encrypt, compress, or optimize the communication between the OPCA the HCA. In order to provide services to multiple organizations, CCC 140 optionally routes the communication within hosting center 144 in accordance with the proprietary tagging of messages, and without exposing customer-related details, such as application data, user data, or the like. Tagging the messages can be done by OPCA 108 or OPCA 128 for communications initiated by the organization. In the other direction, when the operation is initiated by hosting center 144, tagging can be done by the customer-specific applications such as application X for customer A (168), or by the relevant HCA, such as HCA 156.

CCC 140 can be comprised of one or more instances for providing communication between the OPCAs residing on the organizations' premises and the HCAs residing on the hosting center. In case multiple instances are used, each instance can be responsible for communication between one or more virtual servers, and one or more customers' enterprise resources. Also, if multiple instances are used, another level of routing may be required for distributing the activity between the multiple CCC instances.

CCC 140 can reside within the hosting center, or in an independent location external to the hosting center and to the customers.

CCC 140 may connect to the OPCA in a secure manner wherein only the relevant customer's data is exchanged, and using for example certificate exchange.

CCC 140 may connect to the HCA in a secure manner, using one certificate exchange, while multiplexing information related to multiple customers and relating to multiple applications.

OPCA 108 or OPCA 128 serve as agents of hosting center 144 within customer A network 100 or customer B network 120, respectively. Each OPCA is installed within the customer's local area network (LAN) and behind its firewall. OPCA 108 or OPCA 128 may connect to CCC 140 via web proxy, so that no changes to the customer's firewall configuration or firewall rule definition are required.

Since no changes to the organization's systems or firewall are required, OPCA 108 or OPCA 128 may be installed and configured without incurring significant costs.

In some embodiments, the customer may have to configure a "hosted application account" which is used by all users requiring services from the hosted application. The account is granted permissions to the relevant on-premise systems. From within the organization, the OPCA is regarded as a trusted server that provides the required functionality. Behind the scenes, the OPCA delegates the work to an external resource. Since a single account is used in the communication between the OPCA and the CCC, the OPCA may have to keep the accessing user's credentials and relate the relevant response, data or operations to the relevant user.

HCA 156 and HCA 194 have secure connections to CCC 140, using for example certificate exchange. The exchanged certificate may be, for example, a Public Key Infrastructure (PKI) certificate, which allows a person or an organization to combine a digital signature with a public key and a non-public identifying detail, such as a real life name.

The HCA may be configured once per installation of a new server, or per customer or application by the hosting center administrator. The configuration may also be performed automatically.

It is assumed that hosting center 144 is responsible for security within the center boundaries, by preventing a particular customer from accessing data of another customer.

It will be appreciated that the customers' enterprises may comprise one or more computing platforms, on which one or more applications are performed. For example, server 104 or server 124, as well as virtual server 1 (148) or virtual server 2 (178) can be implemented as a computing platform such as a general purpose computer, a personal computer, a mainframe computer, a server, a mobile device, or any other type of computing platform provisioned with a memory device, a CPU or microprocessor device, and I/O ports.

OPCA 108 or OPCA 128, CCC 140, HCA 156 or HCA 194, or any of the firewalls may be implemented as one or more sets of computer instructions, arranged as executables, libraries, functions, web pages, portals or other units designed to be executed by a computing platform Alternatively, the OPCAs, CCC or HCAs can be implemented as firmware ported for a specific processor such as digital signal processor (DSP) or microcontrollers, or can be implemented as hardware or configurable hardware such as field programmable gate array (FPGA) or application specific integrated circuit (ASIC).

Communication between the customer enterprises and the hosting center can take any required protocol, such as HTTP with or without higher layers such as SOAP, REST, XML RPC or any other method which embeds application level context into the communication.

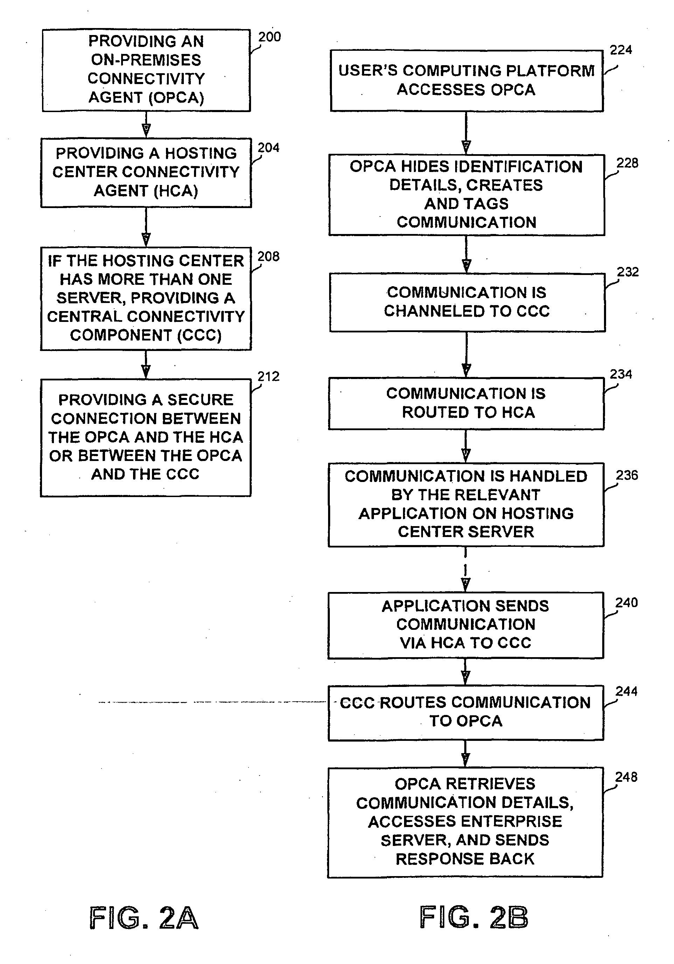

Referring now to Fig. 2A, showing a flowchart of the main steps in a method for enabling a customer organization to use on-demand remote services by a provider employing a hosting center.

At step 200, an on-premises connectivity agent (OPCA) is installed at the premises of the organization. The agent is within the organization's local area network and is protected together with the organizational resources, for example by a firewall.

The OPCA is responsible for transferring communications between computing platforms of the organization and the provider.

At step 204, a hosting center connectivity agent is provided at the hosting center provider premises, which provides communication to or from a virtual server of the provider.

At step 208, if the hosting center has more than one virtual server, or if there are multiple customers using the hosting center services, then a central connectivity component (CCC) may be provided, which routes communication between one or more customer organization and one or more virtual servers, such that a communication from customer A requiring a service or from application X is routed to a virtual server providing service X and associated with customer A.

At step 212 a secure connection is provided between the OPCA at the organization premises, and the HCA. The connection is secured, for example by using a certificate exchange. If the service provider has more than one server, and a CCC is provided, then the secure connection is between the OPCA and the CCC.

Referring now to Fig. 2B, showing a flowchart of the main steps in a method for using an on-demand service from a hosting center by a customer organization. The method is used once the components have been provided as detailed in associate with Fig. 2A above.

At step 224, a computing platform used by a user and executing a client side of an application accesses the OPCA associated with the user's organization with a request. In some embodiments, the OPCA is viewed by the user and by the computing platforms within the organization as an on-premises service provider, such that the user and the computing platform may be unaware that the service is provided by an external entity. The request may contain the user's identification, role, relevant application or other details.

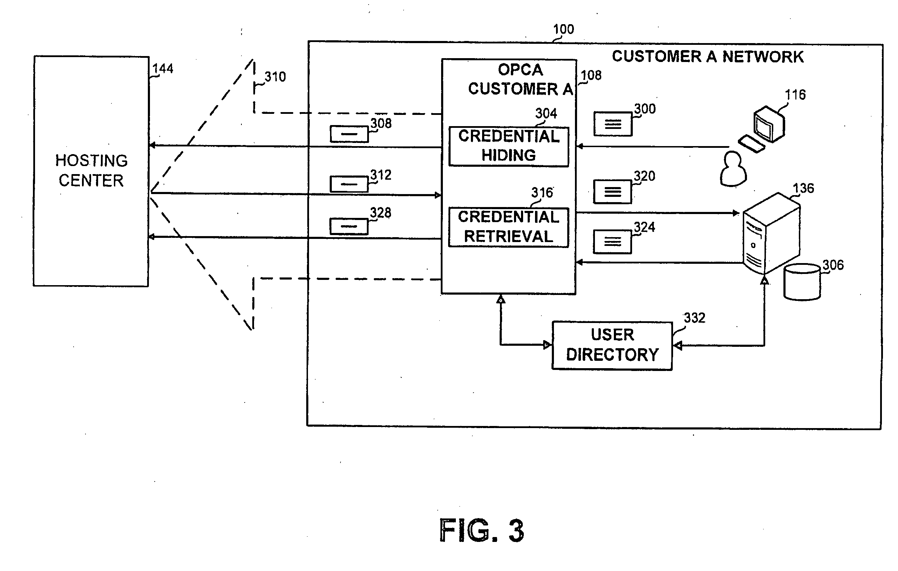

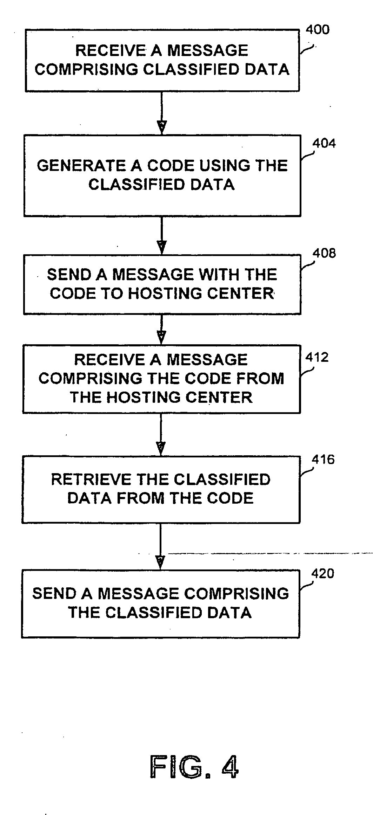

At step 228 the OPCA either updates the communication received from the computing platform of the user, or creates a new communication message based on it. Data such as classified data or identifying details of the user may be eliminated from the communication, and replaced by a code as detailed in association with Fig 3 and Fig. 4 below, so that such details will not leave the enterprise's network. The organization may use a single account shared by all users when communicating with the provider. The OPCA tags the message with identification tags, which associate the message with the organization identification or shared account, and further data and metadata, such as application identification, user's role, context or any other detail. Tagging the messages enables the routing of the message within the hosting center as further explained below.

Optionally, the OPCA keeps record or otherwise stores identification details associated with the communication on a storage device associated with the organization. The stored data may comprise the user's identity or other details, so that the details can be later retrieved and response or further communication can be associated with the details.

At step 232 the communication is channeled to the CCC using a secured channel between the CCC and OPCA. The secure channel may be persistent or may be reestablished anew for each communication.

At step 234 the communication is routed by the CCC, within the multi-tenant environment of the hosting center to an HCA executed by a server which provides the server side for the relevant application, and is associated with the organization. The routing is performed in accordance with the tagging embedded within the communication message, so that the message is routed to the relevant customer's application handler within the multi-tenant environment of the hosting center, using the correct context if required, or the like.

At step 236 the communication is routed from the HCA to the relevant application, and is handled by the relevant application.

If a response or further activity is required, or further information is required from the organization in order for the application to complete the task, then at step 240 the application may send a new communication via the HCA to the CCC, the new communication optionally comprising the code for retrieving the classified data. The communication may be a response to the user's initial request, a request for information required for completing the application's task, or the like. Alternatively, step 240 can be performed as part of an operation initiated by the application, and not only upon processing a request from a user or an application within the organization network.

The communication sent to the CCC may comprise tagged data for routing from the CCC to the relevant organization network, and for supplying information that may be required for handling the communication.

At step 244 the CCC routes the communication to the OPCA of the relevant customer organization, using the tagging or other information.

At step 248 the OPCA receives the communication. The OPCA optionally retrieves the earlier-stored communication details such as the classified data, the identifying data of the relevant user, application or other required details from the code, and sends a query or a request to a relevant server or computing platform within the organization network, together with the classified data. Upon receipt of a response from the computing platform, the OPCA may send a response to the hosting center in the same manner as the initial request.

If required, the process repeats for further requests by the user or the server, or for the hosting center addressing the organization further.

Referring now to Fig. 3, showing a schematic illustration showing an apparatus and the messages exchanged therein, in a typical environment in which the disclosed method and apparatus are used.

Customer A network 100, hosting center 144, and OPCA customer A 108 are as detailed in association with Fig. 1 above. OPCA customer A 108 serves as the connection point within customer A network 100 to an application or service provided by hosting center 144. Since the communications between OPCA 108 and hosting center 144 use a shared and secure channel or link common for all users within the organization and which only differentiates the organization form other organizations receiving services from hosting center 144, there is a need to further differentiate between users within the organization, or between other entities, such as providers, accounts, or the like. However, such differentiation should not account for letting classified data leave the organization network.

Within customer A network 100, a user using computing platform 116, or an application executed by computing platform 116 requires a service provided to the organization by hosting center 144. Computing platform 116 sends a message 300 to OPCA customer A 108, indicating the service and all required data such as user details, transaction details or the like. Some of the details may relate to classified details, such as the identity of a user, an account, a service, a provider, a customer or the like.

OPCA customer A 108, using credential hiding component 304, hides the classified data and generates a corresponding code which may have one-to-one correspondence with the hidden credentials. It will be appreciated that the code is not limited to a numeric value, and that any one or a combinations of values of any type can be determined. The correspondence between the credentials and the code, and vice versa can be hard-coded and stored for example as a table in a storage device such as storage 306 within customer A network 100, or the result of a mathematical or logical computation, which can be performed by OPCA 108 or any computing platform within the environment. The code can be permanent or may vary over time, such that the same identifying details within identical messages sent at different times will be transformed to messages having different codes. The code may depend also on the message, or only on the identifying data. It will be appreciated that various fields within message 308 can be encrypted. Fields which are required by the hosting center for processing are encrypted either using a scheme agreed with hosting center 144, in which case they are deciphered and processed by hosting center 144, or using the generated code. Fields which are not required by the hosting center may be encrypted using any scheme, since the hosting center is not supposed to decrypt or decipher them.

Message 308 which corresponds to message 300 but comprises the code rather than the classified details is sent via secure channel 310 to hosting center 144. Some fields of message 308, such as fields containing organization specific data, may be encrypted such that decrypting them requires the actual link between the OPCA 108 and hosting center 144 to exist. If the link, i.e., secure channel 310 does not exist, the information cannot be extracted.

When hosting center 144 requires data related to the user, account or the entity associated with message 308, it sends message 312 comprising the code via secure channel 310 to OPCA customer A 108. OPCA customer A 108 using credential retrieval component 316 retrieves the relevant identifying information, such as the user name, account name or the like, and sends a relevant query or message 320 comprising the identifying details to a computing platform 136 within the organization. Computing platform 136 processes query or message 320 and optionally issues a response 324, which may also contain credentials or other classified details. Response 324 is processed by OPCA customer A 108 using credential hiding component 304 which generates a corresponding message 328 with a code instead of the identifying details. The code used in message 328 can be the same code as used in message 308, or a different one. Message 328 is sent via secure channel 310 to hosting center 144, optionally as a response to message 312.

It will be appreciated that the process is not necessarily initiated by a user or a computing platform of to customer A network 100. For example, hosting center 144 may be responsible for calculating the salaries of the organization employees. Thus, hosting center 144 can receive a message indicating each new employee hired by the organization, and a relevant code associated with the employee. Then, at the end of each month, hosting center 144 sends a request to the organization network per each employee, asking for the details required for determining the employee's salary, such as number of hours worked.

In some embodiments, in order to prevent data such as user credentials from leaving the organization network, a user directory component 332 may be used within the organization, and in communication with OPCA 108 and platform 136 (you meant 136 and not 306, correct?). User directory 332 can be, for example, Microsoft Active Directory available from Microsoft, Inc. or any other Kerberos-based mechanism, which stores credentials or other data for all users, and optionally for the computing platforms or other resources within the environment. OPCA 108 and platform 136 should be registered with user directory 332, which is acceptable since OPCA 108 is within the organization network, and can therefore be a member of the directory and access it. An active directory will enable an organization to use the disclosed method and apparatus in addition to existing systems.

It will also be appreciated that communication between OPCA 108 and hosting center 144 relates to communication between OPCA 108 and any component of hosting center 144, such as CCC 140, HCA 156 or HCA 194, or the like, as detailed in association with Fig 1 above.

Referring now to Fig. 4, showing a flowchart of the main steps in a method for using a service external to an organization without having identifying or classified details leaving the organization network, in accordance with the disclosure.

At step 400, an OPCA which is a computing platform within a network serving as a connection point between the organization and a hosting center, initiates a message or receives a message from another computing platform within the organization network. The message comprises classified data such as identifying details that should not leave the organization boundaries, i.e., the organization firewall, as the details are classified. The details can relate to a person, an employee, an account, a sale, a customer, a provider or any other entity associated with the organization.

At step 404, the OPCA generates a code using the classified data. The code corresponds to the classified data, and can be generated using a look up table, a hash function, a mathematical or logical computation, or any other method.

At step 408 the OPCA sends a message to the hosting center. The message may be associated with the first message received by the OPCA, and comprises the code rather than the identifying details, so these details do not leave the organization network.

At step 412 the OPCA receives a message from the hosting center, which comprises the code sent to the hosting center on step 408. The message is addressed to the organization network or to a computing platform therein, and comprises a notification, a request for data, a request for performing an activity, or the like.

At step 416 the OPCA retrieves the relevant identifying details from the code comprised in the message received from the hosting center. In retrieving the data, the OPCA may have to perform an operation to reverse the hising operation, to retrieve data from storage, or the like.

At step 420 the OPCA sends a message to a computing platform within the organization. The message can comprise the retrieved identifying details. Alternatively, the identifying details can be used in another manner. For example, the OPCA can send the message to a computing platform, wherein the specific computing platform to which the message is sent is determined in accordance with the identifying details.

Optionally, the OPCA receives a response from the computing platform, and the process of encoding the identifying details before sending the response to the hosting center may repeat for the response.

The disclosed method and apparatus enable the usage of applications or services provided by an entity external to an organization, without having classified data such as identification details leave the organization network. Thus, even if communication leaving the organization is intercepted, classified data cannot be obtained. The method and apparatus hide or conceal the identifying details and replace them with a code, for example by hashing, performing a mathematical or logical operation, using a look up table or any other method.

The code is sent to the hosting center providing the service or application. When additional data or operations are required from the organization, the hosting center or application provider sends the code back to the organization. Within the organization, the required details are retrieved, and the data or operation is handled.

It will be appreciated that the detailed method covers also an apparatus for carrying out the method in which every step is performed by a relevant component, and also a computer storage device comprising computer instructions for carrying out the method.

It will be appreciated that the disclosed subject matter can also be associated with a storage device comprising computer instructions for performing the disclosed methods.

It will be appreciated that the disclosed apparatus, method and device are exemplary only and that further embodiments can be designed according to the same guidelines and concepts. Thus, different, additional or fewer components or steps can be used, different features can be used, different configurations can be applied, or the like.

It will be appreciated by persons skilled in the art that the present disclosure is not limited to what has been particularly shown and described hereinabove. Rather the scope of the present disclosure is defined only by the claims which follow.

## Claims

1. An apparatus for providing on-demand service to an organization by a hosting center (144), the apparatus comprising:
an on-premise connectivity agent (108, 128) located within a local area network (100, 120) of the organization for communicating with a server computing platform (104, 124, 116, 136) within the organization network (100, 120), wherein the on-premise connectivity agent (108, 128) is protected together with the server computing platform (104, 124, 116, 136) by a firewall (112, 132) of the organization network (100, 120), and for delivering the on-demand service from the hosting center (144) to the organization, wherein a secure connection is provided between the on-premise connectivity agent (108, 128) and a central connectivity component (140), the central connectivity component (140) separating the local area network (100, 120) and the hosting center (144) and routing communication between the organization and the hosting center (144),
the on-premise connectivity agent (108, 128) comprising:
a credential hiding component (304) for eliminating classified data from a message (300) sent to the hosting center (144), and generating a code to be sent to the hosting center (144) so that the classified data will not leave the organization network (100, 120), the code corresponding to the classified data; and
a credential retrieval component (316) for receiving a code from the hosting center (144) and retrieving the classified data in accordance with the code.

2. The apparatus of claim 1 wherein the classified data relates to an item selected from the group consisting of: user's credentials; a user's name; a user's e-mail; a user's personal data; an account identifier; a provider; a customer; a sale; and a transaction.

3. The apparatus of claim 1 or 2 wherein the credential hiding component (304) and the credential retrieval component (316) use a transformation between the classified data and the code based on an item selected from the group consisting of: a hash function; a look up table; a mathematical computation; a logical computation; and a mathematical and logical computation.

4. The apparatus of any one of the preceding claims, further comprising a user directory (306) for storing the classified data.

5. A method for providing an on-demand service to an organization by a hosting center (144), the method comprising:
providing an on-premise connectivity agent (108, 128) located within a local area network (100, 120) of the organization for communicating with a server computing platform (104, 124, 116, 136) within the organization network (100, 120), wherein the on-premise connectivity agent (108, 128) is protected together with the server computing platform (104, 124, 116, 136) by a firewall (112, 132) of the organization network (100, 120), and for delivering the on-demand service from the hosting center (144) to the organization, wherein a secure connection is provided between the on-premise connectivity agent (108, 128) and a central connectivity component (140), the central connectivity component (140) separating the local area network (100, 120) and the hosting center (144) and routing communication between the organization and the hosting center (144);
eliminating at a credential hiding component (304) of the on-premise connectivity agent (108, 128) classified data from a message (300) sent to the hosting center (144),
generating at the credential hiding component (304) a code to be sent to the hosting center (144) so that the classified data will not leave the organization network (100, 120), the code corresponding to the classified data; and
receiving at a credential retrieval component (316) of the on-premise connectivity agent (108, 128) a code from the hosting center (144) and retrieving the classified data in accordance with the code.

6. The method of claim 5 wherein the classified data relates to an item selected from the group consisting of: user's credentials; a user's name; a user's e-mail; a user's personal data; an account identifier; a provider; a customer; a sale; and a transaction.

7. The method of claim 5 or 6 wherein generating the code and retrieving the classified data use a transformation between the classified data and the code based on an item selected from the group consisting of: a hash function; a look up table; a mathematical computation; a logical computation; and a mathematical and logical computation.

8. A computer program product comprising computer readable instructions, which when loaded and run in a computer system and/or computer network system, causes the computer system and/or the computer network system to perform operations according to a method of claim 5.

## Patentansprüche

1. Vorrichtung zum Bereitstellen von On-Demand Service für eine Organisation durch ein Hosting Center (144), wobei die Vorrichtung umfasst:
einen On-Premise bzw. vor Ort installierten Konnektivitätsagenten (108, 128), der sich innerhalb eines lokalen Netzwerks (100, 120) der Organisation befindet, und zwar zum Kommunizieren mit einer Serverrechenplattform (104, 124, 116, 136) innerhalb des Organisationsnetzwerks (100, 120), wobei der vor Ort installierte Konnektivitätsagent (108, 128) zusammen mit der Serverrechenplattform (104, 124, 116, 136) durch eine Firewall (112, 132) des Organisationsnetzwerks (100, 120) geschützt wird, und zum Liefern des On-Demand Service von dem Hosting Center (144) an die Organisation, wobei eine sichere Verbindung zwischen dem vor Ort installierten Konnektivitätsagenten (108, 128) und einer zentralen Konnektivitätskomponente (140) bereitgestellt wird, wobei die zentrale Konnektivitätskomponente (140) das lokale Netzwerk (100, 120) und das Hosting Center (144) separiert und eine Kommunikation zwischen der Organisation und dem Hosting Center (144) routet,
wobei der vor Ort installierte Konnektivitätsagente (108, 128) umfasst:
eine berechtigungsnachweisverbergende Komponente (304) zum Eliminieren von klassifizierten Daten aus einer Nachricht (300), die an das Hosting Center (144) gesendet wird, und Generieren eines Codes, der an das Hosting Center (144) zu senden ist, so dass die klassifizierten Daten das Organisationsnetzwerk (100, 120) nicht verlassen werden, wobei der Code den klassifizierten Daten entspricht; und
eine berechtigungsnachweisabrufende Komponente (316) zum Empfangen eines Codes von dem Hosting Center (144) und Abrufen der klassifizierten Daten gemäß dem Code.

2. Vorrichtung nach Anspruch 1, wobei die klassifizierten Daten ein Element betreffen, das ausgewählt ist aus der Gruppe bestehend aus: Benutzerberechtigungsnachweise, Benutzername, Benutzer-Email, persönliche Daten eines Benutzers, Account-Identifizierer, Provider, Kunde, Verkauf und Transaktion.

3. Vorrichtung nach Anspruch 1 oder 2, wobei die berechtigungsnachweisverbergende Komponente (304) und die berechtigungsnachweisabrufende Komponente (316) eine Transformation zwischen den klassifizierten Daten und dem Code basierend auf einem Element ausgewählt aus der Gruppe bestehend aus verwenden: eine Hash-Funktion, eine Nachschlagetabelle, eine mathematische Berechnung, eine logische Berechnung und eine mathematische und logische Berechnung.

4. Vorrichtung nach einem der vorhergehenden Ansprüche, ferner umfassend ein Benutzerverzeichnis (306) zum Speichern der klassifizierten Daten.

5. Verfahren zum Bereitstellen eines On-Demand Service für eine Organisation durch ein Hosting Center (144), wobei das Verfahren umfasst:
Bereitstellen eines On-Premise bzw. vor Ort installierten Konnektivitätsagentens (108, 128), der sich innerhalb eines lokalen Netzwerks (100, 120) der Organisation befindet, zum Kommunizieren mit einer Serverrechenplattform (104, 124, 116, 136) innerhalb des Organisationsnetzwerks (100, 120), wobei der vor Ort installierte Konnektivitätsagent (108, 128) zusammen mit der Serverrechenplattform (104, 124, 116, 136) durch eine Firewall (112, 132) des Organisationsnetzwerks (100, 120) geschützt wird, und zum Liefern des On-Demand Service von dem Hosting Center (144) an die Organisation, wobei eine sichere Verbindung zwischen dem vor Ort installierten Konnektivitätsagenten (108, 128) und einer zentralen Konnektivitätskomponente (140) bereitgestellt wird, wobei die zentrale Konnektivitätskomponente (140) das lokale Netzwerk (100, 120) und das Hosting Center (144) separiert und eine Kommunikation zwischen der Organisation und dem Hosting Center (144) routet,
Eliminieren, an einer berechtigungsnachweisverbergenden Komponente (304) des vor Ort installierten Konnektivitätsagentens (108, 128), von klassifizierten Daten aus einer Nachricht (300), die an das Hosting Center (144) gesendet wird,
Generieren, an der berechtigungsnachweisverbergenden Komponente (304), eines Codes, der an das Hosting Center (144) zu senden ist, so dass die klassifizierten Daten das Organisationsnetzwerk (100, 120) nicht verlassen werden, wobei der Code den klassifizierten Daten entspricht; und
Empfangen, an einer berechtigungsnachweisabrufenden Komponente (316) des vor Ort installierten Konnektivitätsagentens (108, 128), eines Codes von dem Hosting Center (144) und Abrufen der klassifizierten Daten gemäß dem Code.

6. Verfahren nach Anspruch 5, wobei die klassifizierten Daten ein Element betreffen, das ausgewählt ist aus der Gruppe bestehend aus: Benutzerberechtigungsnachweise, Benutzername, Benutzer-Email, persönliche Daten eines Benutzers, Account-Identifizierer, Provider, Kunde, Verkauf und Transaktion.

7. Verfahren nach Anspruch 5 oder 6, wobei das Generieren des Codes und Abrufen der klassifizierten Daten eine Transformation zwischen den klassifizierten Daten und dem Code basierend auf einem Element ausgewählt aus der Gruppe bestehend aus verwenden: eine Hash-Funktion, eine Nachschlagetabelle, eine mathematische Berechnung, eine logische Berechnung und eine mathematische und logische Berechnung.

8. Computerprogrammprodukt, umfassend computerlesbare Instruktionen, die, wenn in einem Computersystem und/oder Computerentzwerksystem geladen und ausgeführt, das Computersystem und/oder Computernetzwerksystem veranlassen, Operationen gemäß einem Verfahren nach Anspruch 5 durchzuführen.

## Revendications

1. Appareil pour fournir un service à la demande à une organisation par un centre d'hébergement (144), l'appareil comprenant :
un agent de connectivité sur place (108, 128) situé au sein d'un réseau local (100, 120) de l'organisation pour communiquer avec une plate-forme informatique de serveur (104, 124, 116, 136) au sein du réseau de l'organisation (100, 120), dans lequel l'agent de connectivité sur place (108, 128) est protégé avec la plate-forme informatique de serveur (104, 124, 116, 136) par un pare-feu (112, 132) du réseau de l'organisation (100, 120), et pour fournir le service à la demande du centre d'hébergement (144) à l'organisation, dans lequel une connexion sécurisée est prévue entre l'agent de connectivité sur place (108, 128) et un composant de connectivité central (140), le composant de connectivité central (140) séparant le réseau local (100, 120) et le centre d'hébergement (144), et acheminant la communication entre l'organisation et le centre d'hébergement (144),
l'agent de connectivité sur place (108, 128) comprenant :
un composant de masquage d'accréditation (304) pour éliminer des données classifiées d'un message (300) envoyé au centre d'hébergement (144) et générer un code devant être envoyé au centre d'hébergement (144) de sorte que les données classifiées ne quittent pas le réseau de l'organisation (100, 120), le code correspondant aux données classifiées ; et
un composant de récupération d'accréditation (316) pour recevoir un code du centre d'hébergement (144) et récupérer les données classifiées conformément au code.

2. Appareil selon la revendication 1, dans lequel les données classifiées concernent un article sélectionné parmi le groupe constitué de : une accréditation de l'utilisateur ; un nom de l'utilisateur : un e-mail de l'utilisateur ; des données personnelles de l'utilisateur ; un identifiant de compte ; un fournisseur ; un client ; une vente ; et une transaction.

3. Appareil selon la revendication 1 ou 2, dans lequel le composant de masquage d'accréditation (304) et le composant de récupération d'accréditation (316) utilisent une transformation entre les données classifiées et le code basée sur un article sélectionné parmi le groupe constitué de : une fonction de hachage ; une table de conversion ; un calcul mathématique ; un calcul logique ; et un calcul mathématique et logique.

4. Appareil selon l'une quelconque des revendications précédentes, comprenant en outre un répertoire d'utilisateur (306) pour stocker les données classifiées.

5. Procédé pour fournir un service à la demande à une organisation par un centre d'hébergement (144), le procédé comprenant :
fournir un agent de connectivité sur place (108, 128) situé au sein d'un réseau local (100, 120) de l'organisation pour communiquer avec une plate-forme informatique de serveur (104, 124, 116, 136) au sein du réseau de l'organisation (100, 120), dans lequel l'agent de connectivité sur place (108, 128) est protégé avec la plate-forme informatique de serveur (104, 124, 116, 136) par un pare-feu (112, 132) du réseau de l'organisation (100, 120), et pour fournir le service à la demande du centre d'hébergement (144) à l'organisation, dans lequel une connexion sécurisée est prévue entre l'agent de connectivité sur place (108, 128) et un composant de connectivité central (140), le composant de connectivité central (140) séparant le réseau local (100, 120) et le centre d'hébergement (144), et acheminant la communication entre l'organisation et le centre d'hébergement (144) ;
éliminer au niveau d'un composant de masquage d'accréditation (304) de l'agent de connectivité sur place (108, 128) des données classifiées d'un message (300) envoyé au centre d'hébergement (144),
générer au niveau du composant de masquage d'accréditation (304) un code devant être envoyé au centre d'hébergement (144) de sorte que les données classifiées ne quittent pas le réseau de l'organisation (100, 120), le code correspondant aux données classifiées ; et
recevoir au niveau d'un composant de récupération d'accréditation (316) de l'agent de connectivité sur place (108, 128) un code du centre d'hébergement (144) et récupérer les données classifiées conformément au code.

6. Procédé selon la revendication 5, dans lequel les données classifiées concernent un article sélectionné parmi le groupe constitué de : une accréditation de l'utilisateur ; un nom de l'utilisateur : un e-mail de l'utilisateur ; des données personnelles de l'utilisateur ; un identifiant de compte ; un fournisseur ; un client ; une vente ; et une transaction.

7. Procédé selon la revendication 5 ou 6, dans lequel générer le code et récupérer les données classifiées utilisent une transformation entre les données classifiées et le code basée sur un article sélectionné parmi le groupe constitué de : une fonction de hachage ; une table de conversion ; un calcul mathématique ; un calcul logique ; et un calcul mathématique et logique.

8. Produit de programme informatique comprenant des instructions lisibles par ordinateur, qui, lors de son chargement et exécution dans un système informatique et/ou système de réseau informatique, amène le système informatique et/ou le système de réseau informatique à réaliser des opérations conformément à un procédé selon la revendication 5.
